# FASCICULE DE BREVET EUROPEEN

(11) **EP 0 956 771 B1**
(45) Date de publication et mention de la délivrance du brevet: **18.02.2004**
(21) Numéro de dépôt: 99401166.6
(22) Date de dépôt: 12.05.1999
(51) Int. Cl.: A21D 13/08

(54) **Procédé de fabrication d'un produit céréalier sec et produit ainsi obtenu**
Verfahren zur Herstellung eines Cerealerzeugnisses und Produkt nach diesem Herstellungsverfahren
Method for making a cereal product and the product thereof

(30) Priorité: 15.05.1998 FR 9806154
(43) Date de publication de la demande: 17.11.1999
(73) Titulaire: LU France, 91130 Ris Orangis (FR)
(72) Inventeur: Berny, Pierre, 91210 Draveil (FR); Berthier, Pascal, 78180 Montigny le Bretonneux (FR); Faye, Pierre-Marie, 91330 Yerres (FR); Simonneau, Marc, 91330 Yerres (FR)
(74) Mandataire: Jacquard, Philippe Jean-Luc

(56) Documents cités:
- EP-A- 0 538 498
- FR-A- 2 046 608
- FR-A- 2 635 642

## Description

La présente invention a pour objet un procédé de fabrication d'un produit céréalier dit sec, à base de pâte céréalière notamment laminée et comportant au moins une céréale, de l'eau et au moins un ingrédient de levage.

Il existe à l'heure actuelle plusieurs procédés permettant d'obtenir des produits céréaliers secs, c'est-à-dire dont l'humidité résiduelle est faible, par exemple inférieure à 5 %.

La biscuiterie repose sur un procédé simple réalisant les opérations de pétrissage, façonnage et cuisson en succession et en utilisant des poudres levantes chimiques pour obtenir l'alvéolation du produit au cours de la cuisson. Lorsqu'il y a utilisation d'une fermentation, celle-ci a systématiquement lieu avant le façonnage et le procédé nécessite tout de même l'utilisation de poudres levantes. Ce procédé permet d'obtenir des produits faiblement humides, à surface lisse, mais présentant une croûte, et de densité moyenne (supérieure à 0,3) et relativement croustillants.

Certains produits de faible densité (Boudoirs, ou biscuits cuiller tels que « Reims Rose » de « LU ») sont obtenus grâce à l'utilisation d'un foisonnement d'une pâte liquide contenant une forte proportion d'oeuf et de sucre et/ou l'utilisation d'émulsifiants ainsi que de poudre levante type carbonate d'ammonium. Ces produits, cuits en général en moule, ont néanmoins des aspects de surface différents de ceux des biscuits avec une présence de petites bulles. Une formule typique d'un produit foisonné du type Boudoir comporte (en poids) : 36,4 % de farine de blé, 36,4 % de sucre semoule, 25,5 % d'oeufs entiers, 0,9 % de sucre vanillé, 0,7 % de malt et 0,1 % de carbonate d'ammonium.

FR-A-2635642 décrit un procédé pour la fabrication d'un produit céréalier comportant les étapes successives de pétrissage de la pâte crue compenant une culture fermentaire, laminoge de la pâte, mise en forme, fermentation régulée et cuisson.

La panification sèche repose sur un procédé relativement complexe avec une première étape consistant en la production de pain par une méthode classique ; pétrissage, façonnage, fermentation et cuisson. Elle est suivie d'un ressuage (période d'attente au froid pendant au moins 24 heures) et d'une deuxième découpe après cuisson avant un séchage final ou grillage. Ce procédé permet d'obtenir des produits croustillants et de densité pouvant être faible sans utiliser de poudre levante, mais dont la surface, suite à la découpe post-cuisson, laisse apparaître la structure interne sur une surface rugueuse et non lisse.

Dans le cadre de ce type de procédé, le cas du produit vendu sous la marque « Triscotte » par HEUDEBERT est particulier puisqu'il n'y a pas de découpe post-cuisson. Néanmoins, la taille du produit est obtenue en limitant la levée lors de la fermentation et de la cuisson par l'utilisation d'un moule métallique constitué de deux plaques séparées par un interstice, ce qui modifie à la fois l'aspect de surface du produit et sa densité. De plus, la surface du produit présente une croûte.

La cuisson-extrusion repose sur la mise en oeuvre d'un cuiseur-extrudeur. Elle permet d'obtenir en une seule étape des produits céréaliers très secs, de densité faible, sans utilisation de poudre levante, mais dont la surface est rugueuse (« bulleuse ») et dont la texture, particulière, est collante. De plus, les produits présentent des effets de bord dûs à l'extrusion, qui se traduisent par des bords latéraux plus ou moins irréguliers et des formes mal maîtrisées.

La présente invention a pour objet un procédé permettant de réunir certaines caractéristiques positives en vue de l'obtention de produits ayant des propriétés organoleptiques particulières : faible densité (sans nécessiter l'utilisation de poudres levantes), aspect de surface lisse, texture très croustillante notamment pour des produits céréaliers secs voire très secs à base essentiellement de farine ou assimilés.

L'invention concerne ainsi un procédé de fabrication d'un produit céréalier sec à base de pâte céréalière comportant au moins une céréale, de l'eau et au moins un ingrédient de levage comportant au moins un microorganisme de fermentation (levure et/ou bactérie), procédé qui met en oeuvre :
a) un pétrissage de la pâte crue
b) un mise en forme de la pâte crue, de préférence par laminage caractérisé en ce qu'il comporte successivement :
c) un découpage de la pâte crue pour former des pâtons individuels crus.
d) une fermentation des pâtons individuels crus.
e) une cuisson-expansion des pâtons individuels fermentés sans formation substantielle de croûte.

La forme extérieure du produit est obtenue par la découpe, alors que les caractéristiques de densité du produit résultent de la fermentation et de la cuisson-expansion au cours de laquelle l'humidité du produit est réduite.

La cuisson-expansion est réalisée dans des conditions où il ne se forme pas du tout de croûte, ou bien où ne se forme qu'une pellicule de faible épaisseur qui n'est pas ressentie comme telle à la mastication. La cuisson-expansion peut être ainsi réalisée par micro-ondes ou hautes fréquences, cette opération étant éventuellement accompagnée d'application d'air froid. Elle peut être aussi réalisée par air chaud et vapeur.

Un grillage ou toastage ultérieur, qui intervient sur le produit cuit, et totalement ou quasi-totalement séché, n'entraîne pas la formation d'une croûte.

Le ou les ingrédients de levage peuvent être exempts de poudre levante. Une partie des levures peut être ajoutée à la farine sous forme de levain.

La pâte crue peut présenter les ingrédients suivants, en poids :

| | |
|---|---|
| Farine de blé et/ou gruau et/ou tout type d'amidon | 40 % à 65 % |
| Levure | 1 % à 10 % |
| Matière Grasse | 0 % à 25 % |
| Sucre | 0 % à 25 % |
| Eau ajoutée | 10 % à 35 % |
| Oeuf (poudre ou liquide) | 0 % à 25 % |
| Lait | 0 % à 35 % |

Il y a lieu de tenir compte dans le calcul de la quantité d'eau ajoutée, de la teneur en eau de l'oeuf et/ou du lait apporté (s) éventuellement sous forme liquide.

La pâte crue présente éventuellement au moins un autre ingrédient, notamment du sel et/ou au moins un arôme et/ou au moins un améliorant (qui peut être une poudre levante) et/ou du chocolat.

L'invention concerne également un produit céréalier croustillant caractérisé en ce qu'il présente une surface lisse et une structure interne alvéolaire, une densité comprise entre 0,15 et 0,35 et plus particulièrement entre 0,17 et 0,31 g/cm³ et un paramètre de pénétrométrie INSTRON compris entre 70 et 210, étant entendu que ce paramètre INSTRON est choisi proportionnel à l'intensité moyenne des pics et à leur nombre par millimètre et inversement proportionnel à la force moyenne et est défini sur une échelle relative, par référence à un produit de référence (« PETIT BRUN EXTRA » de « LU ») qui présente une valeur définie à 100.

Ce paramètre INSTRON est relié à la perception du croustillant par un jury d'analyse sensorielle.

La densité du produit peut être comprise entre 0,18 et 0,28 g/cm³ et de préférence entre 0,19 et 0,26 g/cm³.

Ledit paramètre de pénétrométrie INSTRON peut être par exemple compris entre 130 et 150

Selon un mode de réalisation préféré, le produit comporte des inclusions de billettes de céréale.

Les produits selon l'invention se distinguent nettement des produits secs de l'Art antérieur, notamment :
- les biscuits, qui présentent une croûte lisse en surface et des densités s'étageant entre 0,31 et 0,5 environ. Les biscuits les plus croustillants présentent en général une densité élevée et une teneur en matière grasse élevée. Par exemple, le biscuit vendu sous la marque PREMIUM, présente une densité de 0,32 g/cm³ et une valeur dudit paramètre INSTRON seulement égale à 70. Un biscuit vendu sous la marque PRINCE, présente une valeur dudit paramètre INSTRON égale à 110, présente une densité de 0,43 g/cm³.
- les produits de cuisson-extrusion, qui présentent une surface bulleuse, et une consistance collante lors de la mastication. Par exemple le produit de marque « CRACOTTE » de DANONE présente une densité de 0,13 g/cm³ et un paramètre INSTRON de 130.
- Les produits foisonnés de type boudoir ou biscuits à là cuiller, qui présentent en surface des petites bulles et une forme caractéristique, ont une très forte teneur en sucre, et une teneur en farine relativement faible. Par exemple, le produit « Reims Rose) présente une densité de 0,23 g/cm3 et un paramètre INSTRON de 120.

Les produits selon l'invention se distinguent par la combinaison d'une surface lisse, non croûteuse, d'une densité faible ou moyenne et d'un caractère croustillant marqué.

D'autres caractéristiques et avantages de l'invention apparaîtront mieux dans la suite de la description, dans laquelle le procédé de fabrication sera décrit plus en détail.

L'étape a constituée par le pétrissage, a pour objectif d'obtenir, à partir des ingrédients sous formes diverses (solide, poudre, liquide), une pâte ayant une cohésion et une homogénéité suffisante pour permettre un façonnage sous forme de feuille continue. On peut utiliser à cet effet tout type de pétrin continu ou discontinu. Au cours du pétrissage, il est possible d'ajouter à la pâte des insertions de billettes de céréales.

L'étape b, constituée par la formation d'une bande de pâte crue, de préférence par laminage, a pour objectif de mettre en forme la pâte, pour obtenir par exemple une feuille mince dont l'épaisseur peut varier entre 0,3 mm et 5 mm, pour obtenir un produit d'épaisseur finale désirée.

Le laminage peut être réalisé en continu ou en discontinu, à l'aide d'un ou plusieurs laminoirs à rouleaux simples ou multiples d'orientation longitudinale ou transversale, en vue d'obtenir une feuille d'épaisseur régulière permettant la découpe de pâtons de poids régulier.

L'étape c de découpe a pour objectif de détacher de la pâte des pâtons crus individuels qui, en fin de procédé, constituent des unités de consommation du produit. Les produits peuvent revêtir toutes les formes possibles qui pourront leur être conférées par l'outil de découpe choisi. Ce dernier pourra être de type continu ou discontinu, mais devra assurer une coupe franche et précise.

L'étape d de fermentation est en général réalisée dans une étuve dont la température et l'hygrométrie sont contrôlées pour permettre une levée optimale du produit. La durée d'étuvage peut être par exemple de 30 à 40 minutes. L'étuve peut utiliser un mode de chauffage classique ou accéléré avec utilisation de micro-ondes ou de hautes fréquences. Cette fermentation individuelle des pièces unitaires couplée avec l'étape suivante de cuisson qui la suit immédiatement permet l'obtention de la levée avec de la levure, sans nécessiter de poudre levante, et l'obtention de pièces dont la surface est particulièrement lisse.

L'étape e de cuisson-expansion a pour objectif la cuisson du produit en limitant au maximum la formation d'une croûte. Le produit présente ainsi tout au plus une pellicule lisse de faible épaisseur. Au cours de cette étape de cuisson-expansion, l'humidité du produit est abaissée jusqu'à n'être plus que de quelques % (par exemple 2 % à 5 %).

Les deux types de cuisson les plus favorables sont :
- une cuisson associant de l'air chaud et une injection de vapeur sèche, notamment dans un four tunnel industriel, et par exemple à une température de l'ordre de 150 à 160 °C pendant 5 à 7 minutes. L'injection de vapeur est dosée en fonction de la géométrie du four, à un débit suffisant pour permettre, par effet de condensation sur la surface du produit, de limiter la formation d'une croûte tout en permettant une bonne expansion du produit.
- une cuisson par micro-ondes par exemple pendant quelques minutes, de préférence sous atmosphère d'air froid, qui permet une expansion maximale du produit sans formation de croûte. On peut utiliser une cuisson hautes fréquences en lieu et place de la cuisson par micro-ondes.Dans tous les cas, la puissance appliquée doit être suffisante pour assurer l'expansion.

L'objectif du procédé selon l'invention est de développer le plus possible la structure du produit pour y créer une forte alvéolation sans utiliser de poudre levante, mais en exploitant les effets de la fermentation sur chacune des pièces préalablement découpées.

L'étape f consiste en un grillage, effectué dans un four traditionnel de biscuiterie ou bien dans un four à infrarouges. Sa fonction est d'achever éventuellement le séchage des produits et de leur conférer une coloration agréable.

Les opérations de cuisson-expansion et de grillage peuvent être réalisées dans un seul four séparé en différentes sections correspondant aux opérations unitaires.

Selon une variante de l'invention, on peut inclure dans la pâte crue des billettes de céréales extrudées, quel que soit l'amidon d'origine (riz, maïs...). Ceci confère au produit des propriétés particulières lors de la mastication,.en particulier une sensation de « double texture ». Le diamètre des billettes peut être choisi entre 1 mm et 2,5 mm. De préférence, le diamètre des billettes est choisi de manière à ce qu'elles ne soient pas brisées lors du laminage.

Le procédé associant selon l'invention les étapes de laminage/découpe/fermentation/cuisson-expansion, permet d'obtenir des produits aux caractéristiques spécifiques.

La fermentation de pièces unitaires avant la cuisson simplifie largement le procédé par rapport à la biscotterie classique, ce qui permet une bonne maîtrise de la texture, de la levée et de la surface du produit. Le procédé permet également grâce à la découpe de pièces unitaires à partir d'une bande ou feuille mince, d'obtenir des formes variées, originales et ludiques, ce que ne permet pas la biscotterie traditionnelle.

Les produits réalisés selon l'invention présentent une surface lisse, pratiquement dépourvue de croûte, une structure alvéolée, une densité faible ou moyenne, et un croustillant remarquable. Les produits sont nettement caraccérisés par rapport aux produits issus de procédés biscuitiers, de la panification sèche (biscottes) et de cuisson-extrusion.

L'aspect de surface du produit selon l'invention est très proche de celui d'un biscuit. Il a une surface supérieure très lisse, plus que la plupart des biscuits, et sans aspérité. Selon les formules, cette surface revêt des couleurs de différentes tonalités. La surface inférieure est ponctuée de légères alvéoles suite à la formation de bulles lors de la fermentation et la cuisson-expansion. Néanmoins, la structure intérieure ne peut être aperçue en aucun point de la surface du produit, ce qui n'est pas le cas des produits de panification sèche où l'alvéolation intérieure est clairement visible. Les produits de cuisson-extrusion présentent, quant à eux, un aspect « bulleux » qui est sensiblement différent et moins agréable que l'aspect lisse des produits issus du procédé selon l'invention.

Les produits selon l'invention ont des densités qui sont en général largement inférieures (0,15 à 0,35) à celles couramment rencontrées pour les biscuits (0,30 à 0,5), sachant que les densités les plus hautes des produits du procédé selon l'invention sont celles des produits à haute teneur en matières grasses qui donnent également des densités fortes dans le cas des produits biscuitiers. Par rapport aux produits de panification sèche, les densités sont équivalentes et elles sont supérieures à celles des produits de cuisson-extrusion.

Les produits obtenus selon l'invention ont une texture très croustillante. Les mesures sur matériel INSTRON donnent un paramètre tel que défini ci-dessus, de manière générale plus grand que pour les produits biscuitiers qui sont parfois du même ordre de grandeur que celui des produits de cuisson-extrusion. Néanmoins, ceux-ci sont également caractérisés par une texture très collante après mastication, ce qui n'est pas le cas des produits issus du procédé selon l'invention.

On peut résumer les propriétés d'un produit selon l'invention comme étant :
. léger comme un produit de cuisson-extrusion,
. lisse et d'aspect de surface agréable comme un biscuit,
. très croustillant comme un produit de panification sèche.

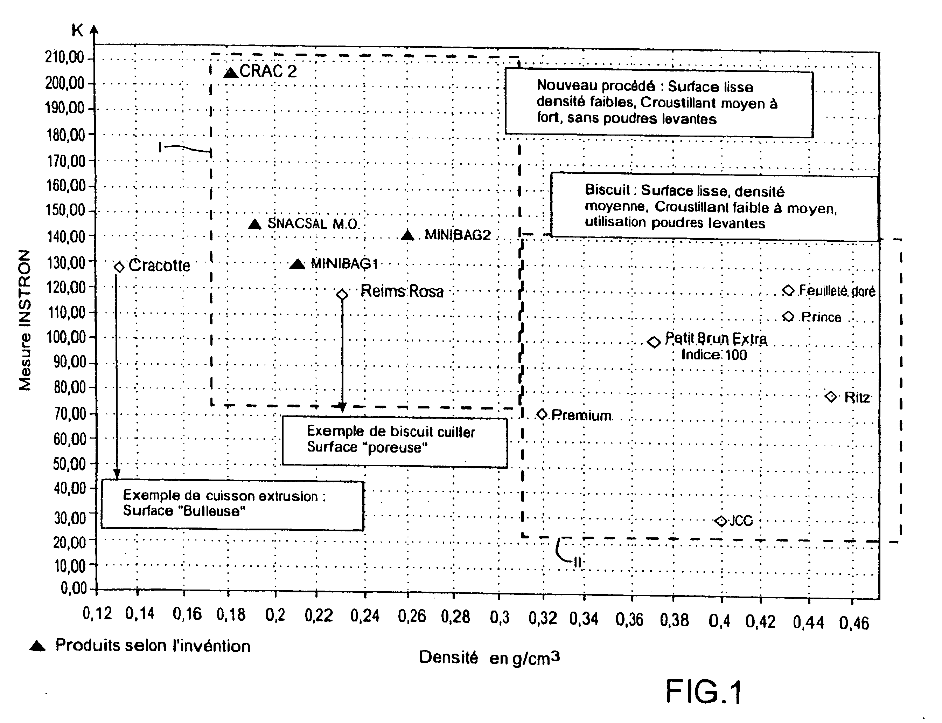

Le graphe donné en Annexe (Fig. 1) indique les domaines de valeur de densité et de croustillant (paramètre INSTRON défini ci-dessus) de produits selon l'invention (domaine I), par rapport aux biscuits (domaine II) et à un produit de cuisson-extrusion (« CRACOTTE » de « DANONE »). Les produits de l'art antérieur mentionnés en exemple (Cracotte, Reims Rose, divers biscuits) sont des produits de marque du Groupe DANONE.

### Exemple de formulation pondérale de la pâte crue selon l'invention :

Exemple 1 :Farine 59 %, Eau 30 %, Levure 5,3 %, Matière Grasse 3 %, Sucre 2 %, Sel 0,6 %, solution d'acide ascorbique 0,1 %.
Exemple 2 :Farine 50 %, levure 2,6 %, Matière Grasse 16 %, Sucre 10 %, Sel 1 %, Oeuf sous forme liquide 10,4 %.(N.B. dans cet exemple, l'eau ajoutée provient uniquement de l'oeuf)).

L'invention s'applique aux domaines de la biscuiterie, pâtisserie et panification traditionnelle (biscuits secs sucrés et biscuits salés), ainsi que de la panification sèche (biscotterie, produits de petit déjeuner et pâtisseries).

L'invention peut être en particulier mise en oeuvre avec les formules pondérales suivantes :
I) Formule dite allégée, proche des produits de boulangerie
   . Farine : 62% (60 à 64)
   . Matières grasses : 2% ( 0 à 4)
   . Sucre : 2% ( 0 à 4)
   . Levure : 4% ( 2 à 5)
   . Eau : 30% (28 à 32)
II) Formule dite riche, proche des produits de biscuiterie
   . Farine : 45% (42 à 47)
   . Beurre : 22% (20 à 24)
   . Sucre : 20% (18 à 22)
   . Levure : 2% ( 2 à 5)
   . Lait / eau : 10% (lait ou eau ou en mélange) (8 à 12)
   . Arômes et sel : 1% en fonction desiderata
III) Formule dite intermédiaire
   . Farine : 50% (48 à 52)
   . Matières grasses : 10% ( 8 à 12)
   . Sucre : 4% ( 3 à 5)
   . Levure : 5% ( 2 à 5)
   . Eau : 20% (18 à 22)
   . Oeuf poudre : 5% ( 0 à 5)
   . Arômes et sel : 2% en fonction desiderata
   . Lait : 4% ( 0 à 5)

Dans le cadre de la présente invention, et pendant et après l'étape de découpe de la pâte crue laminée, pour former des pâtons individuels, une opération de marquage en surface des pâtons individuels peut être réalisée pour personnaliser les produits au moyen par exemple d'une embossage, d'une impression ou bien encore d'un grignage (scarification en surface).

## Revendications

1. Procédé de fabrication d'un produit céréalier dit sec à base de pâte céréalière comportant au moins une céréale, de l'eau et au moins un ingrédient de levage comportant au moins un microorganisme de levage, procédé qui met en oeuvre :
a) un pétrissage de la pâte crue,
b) une mise en forme de la pâte crue,
**caractérisé en ce qu'**il comporte successivement :
c) un découpage de la pâte crue pour former des pâtons individuels crus,
d) une fermentation des pâtons individuels crus,
e) une cuisson-expansion des pâtons individuels fermentés pour obtenir ledit produit sec sans formation substantielle de croûte.

2. Procédé selon la revendication 1 **caractérisé en ce que** ladite formation d'une pâte crue est un laminage.

3. Procédé selon une des revendications 1 ou 2 **caractérisé en ce qu'**il met en oeuvre, après l'étape e :
f) un grillage ou toastage léger.

4. Procédé selon une des revendications 1 à 3 **caractérisé en ce qu'**un dit microorganisme de levage est une levure et/ou une bactérie.

5. Procédé selon une des revendications précédentes **caractérisé en ce que** le ou les ingrédients de levage sont exempts de poudre levante.

6. Procédé selon une des revendications précédentes **caractérisé en ce que** la fermentation est réalisée dans une étuve à hygrométrie contrôlée.

7. Procédé selon une des revendications précédentes **caractérisé en ce que** la cuisson-expansion est réalisée par air chaud et vapeur.

8. Procédé selon une des revendications 1 à 6 **caractérisé en ce que** la cuisson-expansion est réalisée par micro-ondes ou hautes fréquences, et est éventuellement accompagnée d'application d'air froid.

9. Procédé selon une des revendications précédentes **caractérisé en ce que** la pâte crue comprend, en poids :
. Farine de blé et/ou gruau et/ou tout type d'amidon 40 % à 65 %
. Eau ajoutée directement, et/ou par apport éventuel d'oeuf et/ou de lait sous forme liquide 10 % à 35 %
. Levure 1 % à 10 %
. Matière Grasse 0 % à 25 %
. Sucre 0 % à 25 %
. Oeuf 0 % à 25 %
. Lait 0 % à 35 %
et éventuellement au moins un autre ingrédient, notamment du sel et/ou au moins un arôme et/ou au moins un améliorant et/ou du chocolat.

10. Procédé selon la revendication 9, **caractérisé en ce que** la pâte crue comprend, en poids :
. Farine : 60% à 64%
. Eau : 28% à 32%
. Levure : 2% à 5%
. Matières grasses : 0% à 4%
. Sucre : 0% à 4%

11. Procédé selon la revendication 9, **caractérisé en ce que** la pâte crue comprend, en poids :
. Farine : 42% à 47%
. Lait ou eau ou mélange des deux : 8% à 12%
. Levure : 2% à 5%
. Matières grasses 20% à 24%
. Sucre : 18% à 22%
et éventuellement des arômes et/ou du sel.

12. Procédé selon la revendication 9, **caractérisé en ce que** la pâte crue comprend, en poids :
. Farine 48% à 52%
. Eau : 18% à 22%
. Levure : 2% à 5%
. Matières grasses : 8% à 12%
. Sucre : 3% à 5%
. OEufs en poudre : 0% à 5%
. Lait : 0% à 5%
et éventuellement des arômes et/ou du sel.

13. Procédé selon une des revendications précédentes, **caractérisé en ce qu'**il comporte l'incorporation à la pâte crue de billettes de céréale.

14. Produit céréalier croustillant **caractérisé en ce qu'**il présente une surface lisse et une structure intérieure alvéolaire, une densité comprise entre 0,15 et 0,35 g/cm³ et un paramètre de pénétrométrie INSTRON compris entre 70 et 210, ledit paramètre étant défini par rapport au produit de référence « PETIT BRUN EXTRA » qui présente une valeur définie à 100, et **en ce qu'**il est substantiellement dépourvu de croûte.

15. Produit selon la revendication 14, **caractérisé en ce que** la densité est comprise entre 0,17 et 0,31 g/cm³

16. Produit selon la revendication 15, **caractérisé en ce que** la densité est comprise entre 0,19 et 0,26 g/cm³.

17. Produit selon une des revendications 14 à 16, **caractérisé en ce que** ledit paramètre de pénétrométrie INSTRON est compris entre 130 et 150.

18. Produit selon une des revendications 14 à 17, **caractérisé en ce qu'**il présente une teneur résiduelle en eau comprise entre 2% et 5%.

19. Produit selon une des revendications 14 à 18, **caractérisé en ce qu'**il comporte des inclusions de billettes de céréales.

## Patentansprüche

1. Verfahren zur Herstellung eines sogenannten Getreidetrockenproduktes auf Basis von Getreideteig, der aus mindestens einem Getreide, Wasser und mindestens einer Zutat zum Durchsäuem bzw. Auftreiben besteht, welche mindestens einen Durchsäuerungs-Mikroorganismus aufweist, wobei das Verfahren anwendet:
a) Kneten des rohen Teiges,
b) Formen des rohen Teiges,
**dadurch gekennzeichnet, daß** es nacheinander aufweist:
c) Schneiden des rohen Teiges zum Ausbilden von einzelnen rohen Teigstücken,
d) Fermentierung der einzelnen rohen Teigstücke,
e) Garen unter Aufgehenlassen der einzelnen fermentierten Teigstücke zum Herstellen des Trockenproduktes ohne wesentliche Bildung einer Kruste.

2. Verfahren nach Anspruch 1, **dadurch gekennzeichnet, daß** es sich bei dem Formen eines rohen Teiges um ein Walzen handelt.

3. Verfahren nach einem der Ansprüche 1 oder 2, **dadurch gekennzeichnet, daß** es nach Schritt e anwendet:
f) ein leichtes Rösten oder Toasten.

4. Verfahren nach einem der Ansprüche 1 bis 3, **dadurch gekennzeichnet, daß** es sich bei einem solchen Durchsäuerungs-Mikroorganismus um eine Hefe und/oder ein Bakterium handelt.

5. Verfahren nach einem der vorhergehenden Ansprüche, **dadurch gekennzeichnet, daß** die Zutat bzw. Zutaten zum Durchsäuem kein Backpulver umfassen.

6. Verfahren nach einem der vorhergehenden Ansprüche, **dadurch gekennzeichnet, daß** die Fermentierung in einem Ofen mit kontrollierter Hygrometrie durchgeführt wird.

7. Verfahren nach einem der vorhergehenden Ansprüche, **dadurch gekennzeichnet, daß** das Garen unter Aufgehenlassen mit Heißluft und Dampf durchgeführt wird.

8. Verfahren nach einem der Ansprüche 1 bis 6, **dadurch gekennzeichnet, daß** das Garen unter Aufgehenlassen mit Mikrowellen oder Hochfrequenzwellen durchgeführt wird, und gegebenenfalls durch die Anwendung von Kaltluft begleitet ist.

9. Verfahren nach einem der vorhergehenden Ansprüche, **dadurch gekennzeichnet, daß** der rohe Teig in Gewichtsanteilen aufweist:
· Getreide- und/oder Weizenmehl und/oder jegliche Art von Stärke 40% bis 65%
· Wasser, direkt zugegeben und/oder ggf. durch Einbringen von Ei und/oder Milch in flüssiger Form 10% bis 35%
· Hefe 1% bis 10%
· Fett 0% bis 25%
· Zucker 0% bis 25%
· Eier 0% bis 25%
· Milch 0% bis 35%
sowie gegebenenfalls mindestens eine weitere Zutat, insbesondere Salz und/oder mindestens einen Aromastoff und/oder mindestens ein Verbesserungsmittel und/oder Schokolade.

10. Verfahren nach Anspruch 9, **dadurch gekennzeichnet, daß** der rohe Teig in Gewichtsanteilen aufweist:
· Mehl: 60% bis 64%
· Wasser: 28% bis 32%
· Hefe: 2% bis 5%
· Fett: 0% bis 4%
· Zucker: 0% bis 4%

11. Verfahren nach Anspruch 9, **dadurch gekennzeichnet, daß** der rohe Teig in Gewichtsanteilen aufweist:
· Mehl: 42% bis 47%
· Milch oder Wasser bzw. eine Mischung aus den beiden: 8% bis 12%
· Hefe: 2% bis 5%
· Fett: 20% bis 24%
· Zucker: 18% bis 22%
sowie gegebenenfalls Aromastoffe und/oder Salz.

12. Verfahren nach Anspruch 9, **dadurch gekennzeichnet, daß** der rohe Teig in Gewichtsanteilen aufweist:
· Mehl: 48% bis 52%
· Wasser: 18% bis 22%
· Hefe: 2% bis 5%
· Fett: 8% bis 12%
· Zucker: 3% bis 5%
· Eipulver: 0% bis 5%
· Milch: 0% bis 5%
sowie gegebenenfalls Aromastoffe und/oder Salz.

13. Verfahren nach einem der vorhergehenden Ansprüche, **dadurch gekennzeichnet, daß** es die Beifügung von Komstückchen zu dem rohen Teig aufweist.

14. Knuspriges Getreideprodukt, **dadurch gekennzeichnet, daß** es eine glatte Oberfläche und eine innere Zellstruktur, eine Dichte von zwischen 0,15 und 0,35 g/cm³ und einen Penetrometrie-Parameter gemäß INSTRON von zwischen 70 und 210 aufweist, wobei dieser Parameter im Verhältnis zu dem Bezugsprodukt «PETIT BRUN EXTRA» mit einem als 100 festgelegten Wert definiert ist, sowie daß es im wesentlichen keine Kruste besitzt.

15. Produkt nach Anspruch 14, **dadurch gekennzeichnet, daß** die Dichte zwischen 0,17 und 0,31 g/cm³ beträgt.

16. Produkt nach Anspruch 15, **dadurch gekennzeichnet, daß** die Dichte zwischen 0,19 und 0,26 g/cm³ beträgt.

17. Produkt nach einem der Ansprüche 14 bis 16, **dadurch gekennzeichnet, daß** der Penetrometrie-Parameter gemäß INSTRON zwischen 130 und 150 liegt.

18. Produkt nach einem der Ansprüche 14 bis 17, **dadurch gekennzeichnet, daß** es einen Restwassergehalt von zwischen 2% und 5% aufweist.

19. Produkt nach einem der Ansprüche 14 bis 18, **dadurch gekennzeichnet, daß** es Einschlüsse von Komstückchen aufweist.

## Claims

1. Method for manufacturing a cereal product described as dry using a cereal-based dough comprising at least one cereal, water and at least one raising ingredient containing at least one raising micro-organism, which method implements:
a) kneading of the raw dough,
b) shaping of the raw dough,
**characterised in that** it comprises, in succession:
c) cutting of the raw dough to form individual raw dough pieces,
d) fermentation of the individual raw dough pieces,
e) cooking-expansion of the individual fermented dough pieces in order to obtain said dry product without substantial formation of crust.

2. Method according to Claim 1 **characterised in that** said shaping of a raw dough is rolling.

3. Method according to one of Claims 1 or 2 **characterised in that**, after stage e, it implements:
f) light grilling or toasting.

4. Method according to one of Claims 1 to 3 **characterised in that** one said raising micro-organism is a yeast and/or bacterium.

5. Method according to one of the preceding claims **characterised in that** the raising ingredient(s) contain no baking powder.

6. Method according to one of the preceding claims **characterised in that** fermentation is carried out in an oven with controlled hygrometry.

7. Method according to one of the preceding claims **characterised in that** the cooking-expansion is carried out by hot air and steam.

8. Method according to one of Claims 1 to 6 **characterised in that** the cooking-expansion is carried out by microwaves or high frequencies, and where appropriate is accompanied by application of cold air.

9. Method according to one of the preceding claims **characterised in that** the raw dough comprises, by weight:
• Wheat flour and/or groats and/or any type of starch 40% to 65%
• Water directly added, and/or by the possible 10% to 35% addition of egg and/or liquid milk
• Yeast 1% to 10%
• Fat 0% to 25%
• Sugar 0% to 25%
• Egg 0% to 25%
• Milk 0% to 35%
and possibly at least one other ingredient, for instance salt and/or at least one flavour and/or at least one improver and/or chocolate.

10. Method according to Claim 9, **characterised in that** the raw dough comprises, by weight:
• Flour: 60% to 64%
• Water: 28% to 32%
• Yeast: 2% to 5%
• Fat: 0% to 4%
• Sugar: 0% to 4%

11. Method according to Claim 9, **characterised in that** the raw dough comprises, by weight:
• Flour: 42% to 47%
• Milk or water or a mixture of the two: 8% to 12%
• Yeast: 2% to 5%
• Fat: 20% to 24%
• Sugar: 18% to 22%
and possibly flavours and/or salt.

12. Method according to Claim 9, **characterised in that** the raw dough comprises, by weight:
• Flour: 48% to 52%
• Water: 18% to 22%
• Yeast: 2% to 5%
• Fat: 8% to 12%
• Sugar: 3% to 5%
• Powdered eggs: 0% to 5%
• Milk: 0% to 5%
and possibly flavours and/or salt.

13. Method according to one of the preceding claims **characterised in that** it comprises the incorporation into the raw dough of cereal billets.

14. Crusty cereal product **characterised in that** it has a smooth surface and an cellular internal structure, a density of between 0.15 and 0.35 g/cm and an INSTRON penetrometry parameter of between 70 and 210, said parameter being defined in relation to the reference product "PETIT BRUN EXTRA", which has a value defined at 100, and **in that** it has substantially no crust.

15. Product according to Claim 14 **characterised in that** the density is between 0.17 and 0.31 g/cm.

16. Product according to Claim 15 **characterised in that** the density is between 0.19 and 0.26 g/cm.

17. Product according to one of the Claims 14 to 13 **characterised in that** said INSTRON penetrometry parameter is between 130 and 150.

18. Product according to one of the Claims 14 to 17, **characterised in that** it has a residual content water of between 2% and 5%.

19. Product according to one of the Claims 14 to 18 **characterised in that** it comprises inclusions of cereal billets.
